# EUROPÄISCHE PATENTSCHRIFT

(11) **EP 0 360 096 B1**
(45) Veröffentlichungstag und Bekanntmachung des Hinweises auf die Patenterteilung: **16.06.1993**
(21) Anmeldenummer: 89116630.8
(22) Anmeldetag: 08.09.1989
(51) Int. Cl.: B60J 10/00, E06B 5/16, F16J 15/12

(54) **Schwerentflammbare elastische Dichtung**
Flame-resistant resilient seal
Garniture d'étanchéité élastique à combustibilité reduite

(30) Priorität: 20.09.1988 DE 3831894
(43) Veröffentlichungstag der Anmeldung: 28.03.1990
(73) Patentinhaber: Continental Aktiengesellschaft, 30165 Hannover (DE)
(72) Erfinder:

(56) Entgegenhaltungen:
- DE-A- 2 733 775
- DE-B- 2 645 807
- FR-A- 1 342 216
- GB-A- 2 202 484
- US-A- 3 566 541

## Beschreibung

Die Erfindung betrifft eine schwerentflammbare elastische Dichtung aus Gummi oder gummiähnlichen Kunststoffen gemäß dem Oberbegriff des Patentanspruchs 1.

Derartige Dichtungen sind in zahlreichen Varianten sowohl in endlos geschlossener - insbesondere ringartiger - Form als auch in Gestalt von Dichtleisten, insbesondere durch Extrusion gebildeten Dichtungsprofilen, bekannt. Zur Erzielung der durch Normung festgelegten Schwerentflammbarkeits-Eigenschaften ist dem Gummi oder Kunststoff, aus dem die Dichtungen aufgebaut sind, ein auf den betreffenden Gummi oder Kunststoff abgestimmtes Flammschutzmittel oder ein aus mehreren einander ergänzenden Substanzen bestehendes Flammschutzsystem beigemischt. Die jeweils geeigneten Flammschutzmittel sind in großer Zahl bekannt und nicht Gegenstand der vorliegenden Erfindung.

Im Rahmen der in den letzten Jahren ständig verschärften Sicherheitsvorschriften im Bau- und Verkehrswesen - insbesondere bei öffentlichen Bauwerken sowie privaten und öffentlichen Verkehrsmitteln - wurden auch die Anforderungen an die Schwerentflammbarkeit aller in diesen Bereichen eingesetzten brennbaren Einrichtungs- und Ausstattungsteile erheblich gesteigert, und heute werden insbesondere für den serienmäßigen Einbau in Kraftfahrzeuge in aller Regel nur noch solche Teile zugelassen, die den strengen Standards der einschlägigen amerikanischen Normen ASTM 542/82 und NFPA 258/76 entsprechen. Um diese Normen zu erfüllen, müssen Gummi-und Kunststoffteile - und insbesondere auch elastische Dichtungen aus solchen Werkstoffen - mit erheblichen Mengen an Flammschutzmitteln ausgerüstet sein, wodurch sie ihre ursprüngliche und nach wie vor zur Erfüllung ihrer bestimmungsgemäßen Funktion erforderliche Flexibilität bzw. Elastizität in erheblichem Maße einbüßen.

Der vorliegenden Erfindung liegt daher die Aufgabe zugrunde, eine elastische Dichtung zu schaffen, die gleichzeitig sowohl hochelastisch und flexibel als auch schwerentflammbar nach den vorstehend genannten strengen US-Normen ist.

Obwohl eine gleichzeitige Realisierung der genannten Eigenschaften nach derzeitigem fachmännischen Wissensstand in einem wirtschaftlich und technisch praktikablen Rahmen nicht möglich erschien, konnte die gestellte Aufgabe überraschend mit einer Dichtung gelöst werden, die dadurch gekennzeichnet ist, daß sie nur in einer dünnen Oberflächenschicht flammhemmende Additive enthält, während der übrige Dichtungskörper im wesentlichen von solchen Additiven frei ist. Da Dichtungen häufig so eingebaut werden, daß sie an winklig zurückspringende Körperkanten angesetzt oder in nutartige Vertiefungen eingesetzt sind, wo ein Teil ihrer Oberfläche durch feststehende nicht brennbare Wandungsteile dauernd abgedeckt bleibt, weist die erfindungsgemäße Dichtung vorzugsweise nur an ihren im Einbau- bzw. Gebrauchszustand freiliegenden Teilen eine flammhemmend ausgerüstete Oberflächenschicht auf.

Überraschenderweise hat sich gezeigt, daß eine Schichtstärke der flammhemmend ausgerüsteten Oberflächenschicht von nur 0,5 bis 5 mm, vorzugsweise 1 bis 3 mm, ausreicht, um bei den bespielsweise im Kraftfahrzeugbau üblichen Dichtungsprofil-Querschnitten die geltenden Schwerentflammbarkeitsforderungen zu erfüllen, wobei die zur Erfüllung der Dichtungsfunktion notwendige Elastizität und Flexibilität der Dichtungen in voll ausreichendem Maß erhalten bleiben.

Bei besonderen Profilgestaltungen bzw. -abmessungen kann es zweckmäßig sein, anstelle der oder zusätzlich zu den vorstehend angegebenen Bemessungsregeln für die Schichtdicke der flammhemmend ausgerüsteten Oberflächenschichten, deren Stärke auf die Materialstärke des betreffenden Teils des Dichtungsquerschnitts abzustimmen, und zwar in der Weise, daß die Schichtstärke der Oberflächenschicht 5 bis 20%, vorzugsweise 10 bis 15%, der besagten Materialstärke beträgt.

Mit besonderem Vorteil kommt die vorliegende Erfindung bei extrudierten Profilleisten zum Einsatz, wie sie insbesondere im Kraftfahrzeugbau in großem Umfang verwendet werden, wobei deren erfindungsgemäß flammhemmend ausgerüstete Oberflächenschicht vorzugsweise durch Koextrusion erzeugt ist. In einer anderen besonders vorteilhaften Ausführungsform des Erfindungsgegenstandes weisen derartige Profilleisten eine flammhemmend ausgerüstete Oberflächenschicht in Form eines in Profillängsrichtung durchlaufenden folienartigen Streifens auf, der fest mit dem Dichtungskörper des Profils verbunden, insbesondere zusammenvulkanisiert, ist, wobei dieser Streifen vorzugsweise oberflächenbündig in den Dichtungskörper eingebettet ist.

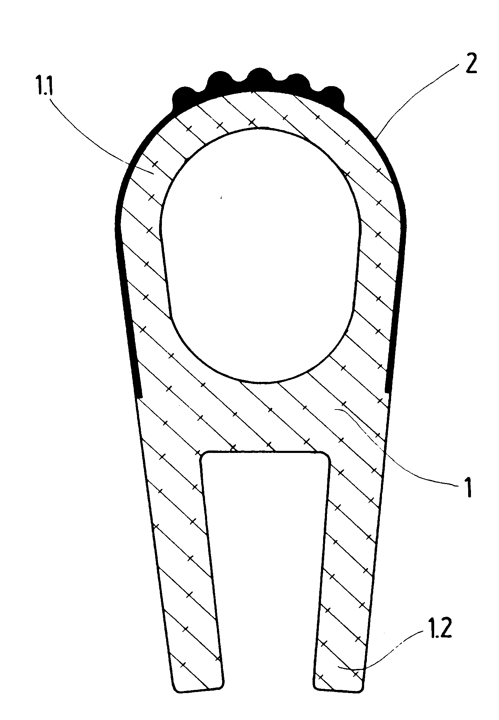

Die beigefügte Zeichnung erläutert die vorliegende Erfindung anhand eines schematisch stark vergrößert dargestellten Ausführungsbeispiels. Die im Querschnitt dargestellte erfindungsgemäße Dichtung - beispielsweise ein durch Extrusion hergestelltes Dichtungsprofil - weist einen in üblicher Weise aus einem elastomeren Werkstoff gebildeten Dichtungskörper 1 auf, der mit seinem Fußteil 1.2 in eine Nut einsetzbar ist. Der aus der Nut herausragende, im dargestellten
Ausführungsbeispiel schlauchartig ausgebildete eigentliche Dichtungsteil 1.1, der im Falle eines Brandes den Flammen ausgesetzt sein kann, weist erfindungsgemäß eine dünne Oberflächenschicht 2 auf, deren Grundrezeptur weitgehend derjenigen des Dichtungskörpers 1 entspricht, die jedoch einen sehr hohen Anteil an Flammschutzmitteln - beispielsweise ein Gemisch, das überwiegend aus Aluminiumoxihydrat mit Zusätzen von Antimontrioxid und Zinkborat besteht - enthält. Durch den hohen Flammschutzmittelanteil, der beispielsweise bei einer Gummidichtung, deren Grundbestandteil Chloroprenkautschuk ist, pro 100 Gewichtsteile Kautschuk vorzugsweise 100 bis 150 Gewichtsteile eines Gemischs aus Aluminiumoxihydrat, Antimontrioxid und Zinkborat beträgt, ist die Oberflächenschicht 2 verhältnismäßig unelastisch und steif, was sich jedoch wegen ihrer geringen Stärke auf die Gesamtelastizität und -flexibilität der Dichtung kaum auswirkt.

## Patentansprüche

1. Schwerentflammbare elastische Dichtung aus Gummi oder gummiähnlichen Kunststoffen, die durch Verwendung an sich bekannter flammhemmender Additive die Kriterien der einschlägigen Normen erfüllt, **dadurch gekennzeichnet,** daß sie nur in einer dünnen Oberflächenschicht (2) flammhemmende Additive enthält, während der übrige Dichtungskörper (1) im wesentlichen von solchen Additiven frei ist.

2. Elastische Dichtung nach Anspruch 1, dadurch gekennzeichnet, daß nur ihre im Einbau- bzw. Gebrauchszustand freiliegenden Teile (1.1) eine flammhemmende Additive enthaltende Oberflächenschicht (2) aufweisen.

3. Elastische Dichtung nach Anspruch 1 oder 2, dadurch gekennzeichnet, daß die Schichtstärke der flammhemmend ausgerüsteten Oberflächenschicht (2) 0,5 bis 5 mm beträgt.

4. Elastische Dichtung nach Anspruch 3, dadurch gekennzeichnet, daß die Schichtstärke der flammhemmend ausgerüsteten Oberflächenschicht (2) 1 bis 3 mm beträgt.

5. Elastische Dichtung nach einem der Ansprüche 1 bis 4, dadurch gekennzeichnet, daß die Schichtstärke der flammhemmend ausgerüsteten Oberflächenschicht (2) 5 bis 20% der Materialstärke des betreffenden Teils des Dichtungsquerschnitts beträgt.

6. Elastische Dichtung nach einem der Ansprüche 1 bis 5, dadurch gekennzeichnet, daß die Schichtstärke der flammhemmend ausgerüsteten Oberflächenschicht (2) 10 bis 15% der Materialstärke des betreffenden Teils des Dichtungsquerschnitts beträgt.

7. Elastische Dichtung nach einem der Ansprüche 1 bis 6, dadurch gekennzeichnet, daß sie als extrudierte Profilleiste ausgebildet und die flammhemmend ausgerüstete Oberflächenschicht (2) durch Koextrusion erzeugt ist.

8. Elastische Dichtung nach einem der Ansprüche 1 bis 6, dadurch gekennzeichnet, daß ihr Dichtungskörper (1) als extrudierte Profilleiste ausgebildet und die flammhemmend ausgerüstete Oberflächenschicht (2) in Form eines in Profillängsrichtung durchlaufenden folienartigen Streifens mit dem Dichtungskörper (1) verbunden, insbesondere zusammenvulkanisiert, ist.

## Claims

1. Flame-resistant resilient seal, which is formed from rubber or rubber-like plastics materials and meets the criteria of the pertinent standards by utilisation of flame-retardant additives known per se, characterized in that it only contains flame-retardant additives in a thin surface layer (2), whereas the remaining sealing body (1) is substantially free of such additives.

2. Resilient seal according to claim 1, characterized in that only its portions (1.1), which are exposed when it is in its installed position, that is to say its position of use, have a surface layer (2) containing flame-retardant additives.

3. Resilient seal according to claim 1 or 2, characterized in that the thickness of the flame-retardant surface layer (2) is between 0.5 and 5 mm.

4. Resilient seal according to claim 3, characterized in that the thickness of the flame-retardant surface layer (2) is between 1 and 3 mm.

5. Resilient seal according to one of claims 1 to 4, characterized in that the thickness of the flame-retardant surface layer (2) is between 5 and 20 % of the thickness of the material of the respective portion of the seal cross-section.

6. Resilient seal according to one of claims 1 to 5, characterized in that the thickness of the flame-retardant surface layer (2) is between 10 and 15 % of the thickness of the material of the respective portion of the seal cross-section.

7. Resilient zeal according to one of claims 1 to 6, characterized in that it is an extruded profile strip, and the flame-retardant surface layer (2) is produced by co-extrusion.

8. Resilient seal according to one of claims 1 to 6, characterized in that its sealing body (1) is an extruded profile strip, and the flame-retardant surface layer (2) is in the form of a film-like strip, which extends in the longitudinal direction of the profile and is joined to the sealing body (1), more especially vulcanised therewith.

## Revendications

1. Garniture d'étanchéité élastique, à combustubilité reduite, constituée par du caoutchouc ou des matières plastiques semblables au caoutchouc et qui satisfait aux critères des normes concernées, grâce à l'utilisation d'additifs retardateurs de combustion, connus en soi, caractérisée en ce qu'elle contient des additifs retardateurs de combustion uniquement dans une mince couche superficielle (2), tandis que le reste du corps (1) de la garniture d'étanchéité est essentiellement exempt de tels additifs.

2. Garniture d'étanchéité élastique selon la revendication 1, caractérisée en ce que seules ses parties (1.1), qui sont à nu à l'état monté ou dans l'état d'utilisation, possèdent une couche superficielle (2) qui contient des additifs retardateurs de combustion.

3. Garniture d'étanchéité élastique selon la revendication 1 ou 2, caractérisée en ce que l'épaisseur de la couche superficielle (2) agencée de manière à retarder la combustion est comprise entre 0,5 et 5 mm.

4. Garniture d'étanchéité élastique selon la revendication 3, caractérisée en ce que l'épaisseur de la couche superficielle (2) agencée de manière à retarder la combustion est comprise entre 1 et 3 mm.

5. Garniture d'étanchéité élastique selon l'une des revendications 1 à 4, caractérisée en ce que l'épaisseur de la couche superficielle (2) agencée de manière à retarder la combustion est comprise entre 5 et 20 % de l'épaisseur du matériau de la partie concernée de la section transversale de la garniture d'étanchéité.

6. Garniture d'étanchéité élastique selon l'une des revendications 1 à 5, caractérisée en ce que l'épaisseur de la couche superficielle (2) agencée de manière à retarder la combustion est comprise entre 10 et 15 % de l'épaisseur du matériau de la partie concernée de la section transversale de la bague d'étanchéité.

7. Garniture d'étanchéité élastique selon l'une des revendications 1 à 6, caractérisée en ce qu'elle est agencée sous la forme d'une barrette profilée extrudée et que la couche superficielle (2) agencée de manière à retarder la combustion est produite par coextrusion.

8. Garniture d'étanchéité élastique selon l'une des revendications 1 à 6, caractérisée en ce que son corps (1) est réalisé sous la forme d'une barrette profilée extrudée et que la couche superficielle (2) agencée de manière à retarder la combustion est réunie, notamment par assemblage par vulcanisation, sous la forme d'une bande en forme de feuille s'étendant dans la direction longitudinale du profilé, au corps (1) de la garniture d'étanchéité.
